# EUROPEAN PATENT APPLICATION

(11) **EP 4 650 670 A1**
(43) Date of publication of application: **19.11.2025**
(21) Application number: 24176777.1
(22) Date of filing: 17.05.2024
(51) Int. Cl.: F24C 15/32, F24H 9/00, B64D 11/04, F22B 1/28

(54) **LIMESCALE COLLECTION APPARATUS**

(71) Applicant: B/E Aerospace, Inc., Winston-Salem, NC 27105 (US)
(72) Inventor: PANJER, Frederik Adrian Stephan, 3953BW Maarsbergeb (NL)
(74) Representative: Dehns

(57) **Abstract**

Disclosed herein is a limescale collection apparatus for use with an aircraft galley steam oven. The limescale collection apparatus includes a reservoir, a water inlet, a water outlet and one or more deposition surfaces. The reservoir is configured to hold water. The water inlet is fluidly connected to the reservoir. The water outlet is fluidly connected to the reservoir. The one or more deposition surfaces are within the reservoir for deposition of scale. There is also provided a steam oven for an aircraft galley including such a limescale collection apparatus.

## Description

### TECHNICAL FIELD

The present disclosure relates to aircraft galley steam ovens, and in particular to a limescale collection apparatus for use with such a steam oven of an aircraft galley.

### BACKGROUND

Aircraft galleys are fitted with a variety of apparatus and devices for, among other things, providing food and beverages to passengers of aircraft.

One such apparatus used in aircraft galleys is a steam oven, which may also be called an aircraft galley steam oven or an aircraft galley insert steam oven. The use of steam in the oven can make the heating of food more efficient. A steam oven has an interior cavity, or internal chamber, which is heated, for example by heating elements, to heat items, e.g., food, within the interior cavity. A steam oven injects water, which becomes steam within the interior cavity. The water may become steam due to contact with a baffle plate included in the interior cavity, or due to contact with the heating elements directly, or due to contact with walls of the interior cavity, each of which are hotter than the boiling point of the water.

Upon this evaporation, the minerals in the water precipitate, notably limescale (or 'scale', or calcium carbonate, CaCO₃), on the surface or surfaces on which the water had evaporated.

The precipitation of limescale can in turn reduce the efficiency of the heating elements and the other parts of the steam oven. For example, limescale can be thermally insulative on the heating elements, or it can clog the location where water is injected into the interior cavity, which may prevent the use of steam altogether.

The formation of limescale is governed by an equilibrium in water between dissolved calcium bicarbonate and dissolved calcium carbonate, as follows: Ca²⁺ + 2 HCO⁻₃ 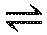 Ca²⁺ + CO²⁻₃ + CO₂ + H₂O

When water temperature rises, this equilibrium moved to the right of the equation above. Carbon dioxide (CO₂) leaves as a gas, and the equilibrium moves further to the right, notably increasing the amount of CO²⁻₃ ions, which react with the Ca²⁺ ions to form CaCO₃ (calcium carbonate). This effect of limescale deposition is thus particularly relevant for steam ovens, where the water is heated to boiling point.

Other minerals dissolved in the water can also contribute to the formation of scale.

The hardness of the water, which is a measure of the amount of minerals dissolved in the water, affects the propensity for limescale formation. Harder water will provide more scale.

The water used in an aircraft can vary in hardness due to the hardness of the water provided for the aircraft at different airports. This can lead to exacerbation of the above-identified inefficiencies as a result from limescale formation.

Accordingly, there is a desire to overcome the above problems, and to reduce the time requirements for removal of limescale from aircraft galley ovens.

### SUMMARY

From one aspect, there is provided a limescale collection apparatus for use with an aircraft galley steam oven. The limescale collection apparatus includes a reservoir, a water inlet, a water outlet and one or more deposition surfaces. The reservoir is configured to hold water. The water inlet is fluidly connected to the reservoir. The water outlet is fluidly connected to the reservoir. The one or more deposition surfaces are within the reservoir for deposition of scale.

In some examples, the limescale collection apparatus includes a heat exchanger connected to the reservoir configured to transfer heat to the water in the reservoir.

In some examples, the heat exchanger is partially insulated to moderate the heat transfer to the water in the reservoir.

In some examples, the limescale collection apparatus includes a heating element configured to heat the reservoir; and a control unit configured to control the heating element.

In some examples, the heating element is an etched foil heating element.

In some examples, the limescale collection apparatus includes a temperature sensor configured to monitor the temperature of the reservoir and to provide a temperature signal to the control unit.

In some examples, the limescale collection apparatus includes an insulation sleeve disposed around the heating element and the reservoir.

In some examples, the water inlet includes a pipe having a proximal end attached to a base of the reservoir and a distal end disposed at a location between 30% and 70% of an axial length of the limescale collection apparatus away from the base of the reservoir.

In some examples, the one or more deposition surfaces include interior surfaces of walls of the reservoir.

In some examples, the one or more deposition surfaces include surfaces of ribs extending inwardly into the reservoir from walls of the reservoir.

In some examples, the limescale collection apparatus includes an inlet baffle plate configured to direct water away from the water inlet upon entry into the reservoir.

In some examples, the one or more deposition surfaces include a hydrophobic coating configured to reduce the energy required to remove the deposited limescale from the one or more deposition surfaces.

In some examples, the limescale collection apparatus includes a pressure relief valve configured to release air from the reservoir when the internal pressure passes a threshold pressure.

From another aspect, there is provided a steam oven for an aircraft galley comprising including an interior oven cavity, one or more heating elements and a water supply system. The one or more heating elements are configured to heat the interior oven cavity to over 100°C. The water supply system includes a water inlet, the limescale collection apparatus of any of the above, an injector valve, and a water injector. The water inlet is configured to be connected to an external water source. The water injector is configured to inject water from the water supply system to the interior oven cavity for evaporation. The limescale collection apparatus is replaceably removable from the steam oven.

In some examples, the water supply system includes a bypass water line fluidly connected in parallel with the limescale collection apparatus between the water inlet and the injector valve, wherein the bypass line includes an over pressure valve.

In some examples, the heat exchanger is a heat sink having a first side disposed in contact with an oven wall of the interior oven cavity in the vicinity of the one or more heating elements and the heat sink has a second side opposing the first side and disposed in contact with a wall of the reservoir.

In some examples, the external water source is a pressurised water line from an aircraft galley.

In some examples, the injector valve is a normally open valve.

Any of the above features may be combined in any combination unless expressly stated otherwise.

### BRIEF DESCRIPTION OF DRAWINGS

Various embodiments of this disclosure will now be described by way of example only, with reference to the accompanying drawings in which:
Figure 1 is a schematic cross-sectional view of an aircraft galley steam oven including a scale collection tank;
Figure 2 is a schematic cross-sectional enlarged view of the limescale collection apparatus of figure 1;
Figure 3 is a schematic cross-sectional view of the limescale collection apparatus in accordance with another example; and
Figure 4 is a schematic perspective external view of the limescale collection apparatus of figure 3.

### DETAILED DESCRIPTION OF DRAWINGS

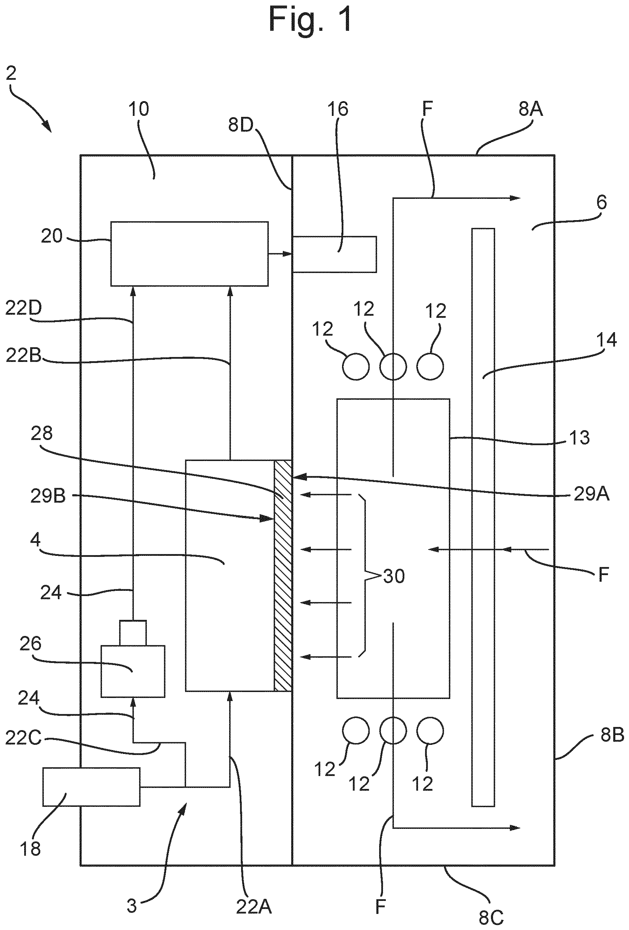

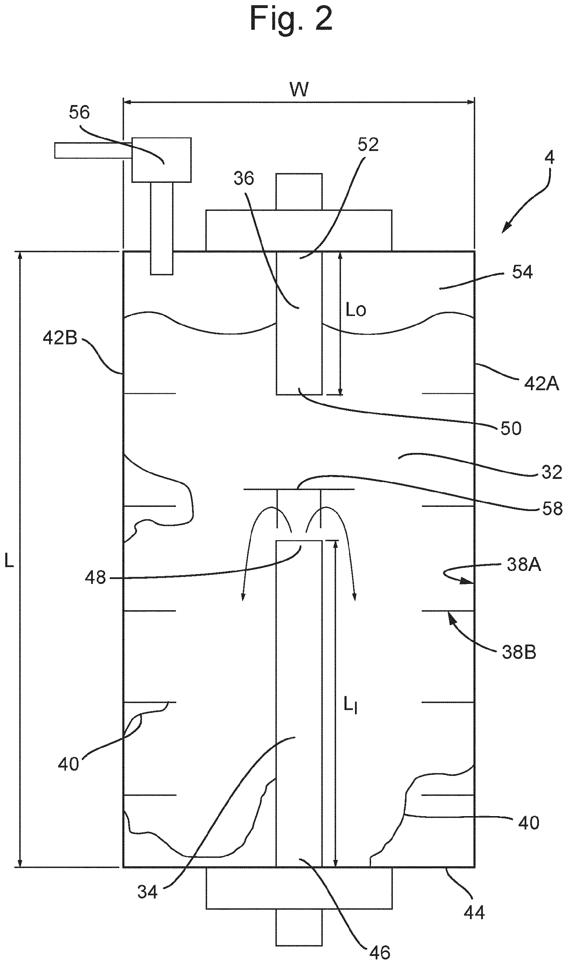

With reference to figures 1 and 2, there is described an aircraft galley steam oven 2 and a limescale collection apparatus 4. Figure 1 shows the aircraft galley steam oven 2 and figure 2 shows the limescale collection apparatus 4 in further detail, but in isolation of the aircraft galley steam oven 2.

The aircraft galley steam oven 2 includes an interior cavity 6 (which may also be called an internal chamber or a cooking chamber etc). The interior cavity 6 illustrated may take a shape other than that illustrated. Moreover, the space to the right-hand side of the figure illustrated will be larger than what is shown as that is the space in which food or other items are heated.

The interior cavity is defined by oven walls 8A, 8B, 8C, 8D. Oven wall 8D is an internal oven wall, oven walls 8A and 8C may be internal or external, and oven wall 8B is external, and may be provided by an openable oven door. Further oven walls (not illustrated) may be present in and out of the plane of the page shown in figure 1 respectively.

Adjacent, or behind from the point of view of a user or aircraft cabin crew, the interior cavity 6 is a steam oven service space 10, which includes components for supplying services to the steam oven. The steam oven service space 10 may be considered as part of the steam oven 2.

The interior cavity 6 includes a heating element 12, which, in the illustrated example, is a set of heating coils 12, but could take another form.

The interior cavity 6 also includes a baffle plate 14. The baffle plate 14 is a flat sheet of metal and is disposed near the heating element 12. The heating element 12 heats some of the interior cavity 6 and more specifically the air around the heating element 12. The interior cavity 6 also includes a ventilator 13 (or a fan or radial wheel blower, or some other means for creating airflow) disposed between tubes of the heating element 12 which causes air flow F to move through the centre of the baffle plate 14. The ventilator 13 causes the air flow F to move over the tubes of the heating element 12, which heats the air flow F and cools the tubes, and then further moves the air flow F into the remainder of the interior cavity 6 via a gap between the baffle plate 14 and the oven walls 8A, 8C. As will be appreciated, the heating of the interior cavity 6 of the oven 2 could be performed by any suitable means in alternative configurations.

The interior cavity 6 includes a water injector 16, which may take the form of nozzle, or multiple nozzles, configured to inject water into the interior cavity 6. The water is directed toward either the baffle plate 14 or the heating elements 12, and upon contact therewith, is evaporated to form steam.

The steam helps to improve the efficiency of the heating of the food within the interior cavity 6.

The steam oven 2 also includes a water supply system 3 which includes a water inlet 18, the limescale collection apparatus 4, an injector valve 20, and the water injector 16. The water inlet 18 is fluidly connected to the limescale collection apparatus 4 by a first water line 22A. The limescale collection apparatus 4 is fluidly connected to the injector valve 20 by a second water line 22B. The water supply system 3 as illustrated also includes a bypass water line 24, configured to provide a bypass water flowpath round the limescale collection apparatus 22A. The bypass water line 24 includes a third water line 22C, a fourth water line 22D, and an overpressure valve 26 (or bypass valve). The third water line 22C connects the water inlet 18 to the overpressure valve 26 and the fourth water line 22D connects the overpressure valve 26 to the injector valve 20.

The injector valve 20 is a 'normally open' valve. That is, it allows water to flow form the output of the overpressure valve 26 or the limescale collection apparatus 4 to the water injector 16 in usual operation, but can be closed in response to a user command (or in response to certain conditions) to prevent the flow of water therethrough.

The overpressure valve 26 ensures that if a blockage occurs within the limescale collection apparatus 4, which may periodically be the case due to a build-up of limescale in parts thereof, the water supply system 3 is still able to supply water to the interior cavity 6 of the steam oven 2 for providing steam.

The water inlet 18 may be connected to a pressurised water supply (not illustrated) from the aircraft galley.

As can be seen in figure 1, there is a heat exchanger, which, in the illustrated arrangement, is a heat sink 28, disposed between, and in contact with, the limescale collection apparatus 4 and the interior cavity 6, or more particularly, the internal oven wall 8D. The heat sink 28 is configured to transfer heat (as shown by the arrows 30 in the figure) from the interior cavity 6 to the limescale collection apparatus 4, and more particularly a reservoir of water 32 (see figure 2) within the limescale collection apparatus 4. The heat sink 28 has a first side 29A disposed in contact with the interior oven wall 8D and has a second side 29B opposing the first side 29A and in contact with the limescale collection apparatus 4.

In alternative arrangements, instead of a passive heat sink as illustrated, an active heat exchanger could be used. Such an active heat exchanger could include a heating element extending from the interior cavity 6 round the limescale collection apparatus 4, for example in a helical arrangement. The heating element would have a means to extract heat from the interior cavity 6, such as a conduit of fluid in thermal relationship with the interior cavity 6, and a means to transfer heat to the limescale collection apparatus 4, such as an extension of that conduit round the apparatus 4 and in thermal relationship therewith, wherein a pump is included to flow fluid from the conduit in thermal relationship with the interior cavity 6, to the extension of the conduit in thermal relationship with the apparatus 4. Such an active heat exchanger could be configured to selectively transfer a different amount of heat form the interior cavity 6 to the limescale collection apparatus 4, for example by changing the speed at which the pump flows fluid through the system.

Still further alternative arrangements include an active heat control using a separate heating element for the limescale collection apparatus 4. That arrangement is described further below.

Figure 2 shows the limescale collection apparatus 4.

The limescale collection apparatus 4 includes a water reservoir 32, a water inlet 34, a water outlet 36 and one or more deposition surfaces 38A, 38B within the reservoir for deposition of scale 40.

The illustrated limescale collection apparatus 4 has a cuboid shape, but it will be appreciated that the limescale collection apparatus 4 of the disclosure is not limited to such a shape. However, the limescale collection apparatus 4 is configured to match the heat sink 28. For example, a first wall 42A of the reservoir 32 is flat so as to conform to the second side 29B of the heat sink 28, wherein the second side of the heat sink 28 is flat. Alternatively, in arrangements not illustrated, the first wall may have a curved profile which matches a curved second side of the heat sink.

The deposition surfaces 38A, 38B of the limescale collection apparatus 4 can take various forms. As illustrated, one form for the deposition surfaces 38A is provided by the interior surfaces 38A of walls 42A, 42B of the reservoir 32, or the base 44 of the reservoir 32. Some limescale deposits 40, precipitated from the water, are illustrated on such deposition surfaces 38A. The deposition surfaces 38B can also take the form of surfaces of ribs 38B (or fins) extending into the reservoir 32 from the walls 42A, 42B (and optionally, though not illustrated, from the base 44) of the reservoir 32. While illustrated as extending into the reservoir a certain distance, it will be appreciated that the length of the extension into the reservoir of the ribs 38B can be different from what is illustrated, and the extension of each rib may be different from the other ribs 38B. Some limescale deposits 40, precipitated from the water, are illustrated on the ribs 38B. The ribs 38B may also improve a heat transfer between the walls 42A, 42B and the water within the reservoir 32, which may ensure more calcium is removed from the water within the limescale collection apparatus 4.

While two examples of deposition surfaces 38A, 38B are described, it will be appreciated that further options could be used.

The deposition surfaces 38A, 38B may include a hydrophobic coating (or other type of low-adherence coating. Such a coating results in a weak bonding, or adherence, between the deposition surface 38A, 38B and the limescale deposits 40, which thereby makes it easier (that is, less energy is required) to remove scale deposits (40) that form thereon.

A material is classed as hydrophobic when the contact angle of a water in contact with that material exceeds 90°

The inlet 34 of the limescale collection apparatus 4, as shown, extends substantially toward the middle of the reservoir 32, such that the water flowing into the reservoir 32 does so away above the limescale deposits 40 and allows for significant build-up of limescale before the inlet 34 is blocked. To this end, the water inlet 34 may be a conduit, a tube, or a pipe, having a proximal end 46 and a distal end 48, and the length L_{I} of the water inlet 34 between the proximal end 46 and the distal end 48 may be about half, or more broadly between 30% and 70% of a length L of the limescale collection apparatus 4. Furthermore, the apparatus 4 may include an inlet baffle plate 58 (or a diffuser) to direct the water away from the outlet 36 as it enters the reservoir 32. The inlet baffle plate 58 accordingly ensures that the water flows indirectly from the inlet 34 to the outlet 36, which increases the time spent within the reservoir 32 and the amount of contact with the deposition surfaces 38A, 38B for any individual portion or streamline of water as compared to an arrangement not having such an inlet baffle plate 58.

The outlet 36 of the limescale collection apparatus 4 may also be a conduit, a tube, or a pipe, having an outlet proximal end 50 and an outlet distal end 52. The length L_{O} between the outlet proximal end 50 and the outlet distal end 52 is such that the outlet proximal end extends into the water in the reservoir 32 during use. For example, that length L_{O} may be between 10% and 35%, or more narrowly about 25% of the length L of the limescale collection apparatus 4.

The proximal end 46, 50 of the inlet 34 and outlet 36 respectively, is the end toward a 'bottom' of the limescale collection apparatus 4, the end toward the first water line 22A discussed above.

The distal end 48, 52 of the inlet 34 and outlet 36 respectively, is the end toward a 'top' of the limescale collection apparatus 4, the end toward the second water line 22B discussed above.

The extension of the water outlet 36 enables a buffer of air 54 at the top of the limescale collection apparatus 4.

Fluidly connected to the air buffer 54, the limescale collection apparatus 4 as illustrated includes a pressure relief valve 56, configured to release pressure if the pressure in the limescale collection apparatus 4 exceeds a threshold pressure. The pressure relief valve 56 may be mechanically tailored to such a threshold pressure.

The length L of the limescale collection apparatus 4 is between about 5 cm and 30 cm, more narrowly between 10cm and 20 cm, for example, about 15 cm. The width W of the limescale collection apparatus 4 is between about 3cm and about 10 cm, for example, about 5 cm.

The steam oven 2, in particular the interior cavity 6 thereof may be operated at any suitable temperature, above the boiling point of water to ensure the water is steam. For example, the interior cavity 6 may be heated to between 110 °C and 170 °C, or more narrowly between 120 °C and 150 °C, for example, about 130 °C.

The limescale collection apparatus 4, in particular the water in the reservoir 32 may be taken to between 60 °C and the boiling point of water. At above 60 °C a significant amount of the calcium dissolved in the water is able to precipitate out at limescale. As set out above, this is the result of an equilibrium in the solution of the water, so the precise temperature will determine the amount of limescale precipitated, together with other factors, such as the hardness of the water.

The design of the heat sink 28 is tailored depending on the desired operating temperature of the interior cavity 6 to provide the desired temperature of the reservoir 32 o the limescale collection apparatus 4.

The limescale collection apparatus 4 is replaceably removable from the steam oven 2, such that, after the limescale collection apparatus 4 has collected limescale deposits 40 it may be drained of some water via the inlet 34, and then removed from the steam oven 2. Water below the distal end 48 of the inlet 34 will remain in the reservoir 32. The limescale collection apparatus 4 may then be either replaced with a new limescale collection apparatus 4, or it may be emptied of limescale, and replaced in its place in the steam oven 2. The limescale collection apparatus 4 may be replaced in a different steam oven so as to optimise maintenance workflow. That is, a limescale collection apparatus 4 may be swapped out in one steam oven 2 immediately, then taken and emptied of limescale, and stored ready to be immediately swapped into a second oven when a limescale collection apparatus 4 is removed from the second oven. This operation is performed when the aircraft is on the ground, for example at dedicated aircraft maintenance stations (not 'on-wing').

The limescale collection apparatus 4 and/or the over pressure valve 26 may include sensors (not illustrated) to determine when replacement of the limescale collection apparatus is necessary. For example, a flow rate sensor in the limescale collection apparatus 4, in particular in the water outlet 36 thereof, could determine when water no longer flows through the water outlet 36, as would be the case if either the water outlet 36 or water inlet 34 has become clogged with limescale, and so would indicate the need to replace the limescale correction apparatus 4. Similarly, a flow rate sensor in the over pressure valve 26, would indicate when water is flowing through the over pressure valve 26, which in turn is indicative of increased pressure in the first and third water lines 22A, 22C as a result of an impedance to the flow through the limescale collection apparatus. Of course, it will be appreciated that such sensors would be used in conjunction with information about the state of the normally open injector valve 20 so as to avoid a false conclusion about the need for replacement when water correctly does not flow through the limescale collection apparatus.

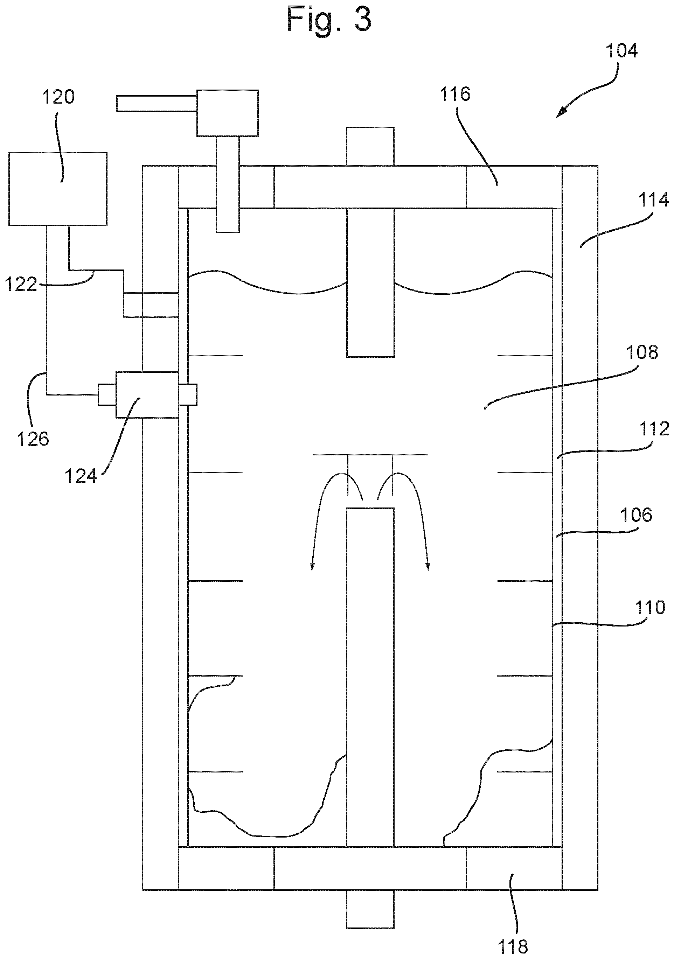

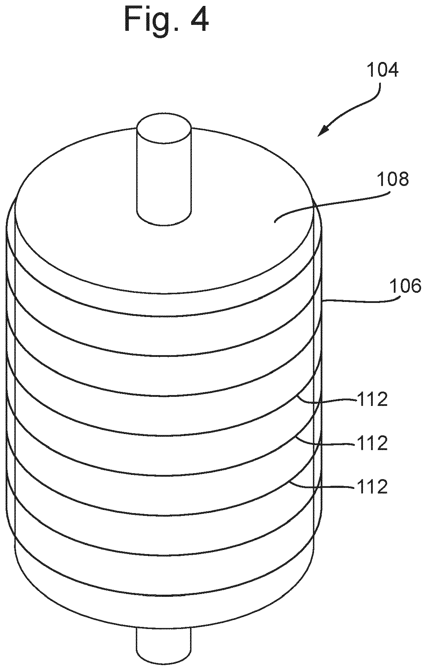

As mentioned above, Figures 3 and 4 illustrate an alternative limescale collection apparatus 104. Other than where specifically described below, the alternative limescale collection apparatus 104 includes the same features at the limescale collection apparatus of figures 1 and 2 and the like elements are not repeated herein for conciseness.

The limescale collection apparatus 104 of figures 3 and 4 differs from that of figures 1 and 2 in that, instead of a heat exchanger 28 or heat sink 28, the limescale collection apparatus 104 includes a separate heating element 106. One exemplary separate heating element 106 is an etched foil heating element 106, which includes resistive heating tracks, paths or elements etched onto or into a flexible substrate. Such an etched foil heating element 106 can be wrapped round a cylindrical limescale collection reservoir 108. The illustrated limescale collection reservoir 108 of this arrangement is cylindrical; however, as will be appreciated, it could have other shapes. This is in contrast to the limescale collection apparatus 4 of figures 1 and 2, which needs a flat surface to correspond to the heat sink 28.

The etched foil heating element 106 may include a heat transfer collar 110 configured to be in contact with the cylindrical limescale collection reservoir 108 and etched foil elements 112 in contact with, or embedded in the heat transfer collar 110. In this way, when the etched foil heating element 106 is heated up, by passing current therethrough, the heat is transferred to the limescale collection reservoir 108. The heat transfer collar 110 will also provide protection to the etched foil elements 112 within the etched foil heating element 106, but still ensuring effective heat transfer to the reservoir 108.

An insulation sleeve 114 is shown in figure 3 (omitted from figure 4 for illustrative purposes). This sleeve improves the efficiency of the heat transfer from the etched foil heating element 106 to the limescale collection reservoir 108, and furthermore provides mechanical support for the etched foil heating element 106.

The insulation sleeve 114 includes a cap 116 and a base 118, at least one of the cap 116 and base 118 being removable. As such, the limescale collection reservoir 108 may be removed from the insulation sleeve 114, leaving the etched foil heating element 106 in place ready for a replacement limescale collection reservoir 108.

As seen in figure 3, there is a control unit 120 electrically connected to the etched foil heating element 106 via wiring 122. The control unit 120 is used to supply a current to the etched foil heating element 106 to hear the limescale collection reservoir 108 to a desired temperature. In typical examples, the desired temperature will be between 60 °C and about 90°C, more specifically between about 61 °C and 75 °C, or about 62 °C, about 63 °C, about 64 °C, about 65 °C, about 66°C, about 67 °C, about 68 °C or about 69 °C.

To that end, the control unit 120 is configured to selectively supply different amounts of current to the etched foil element 106.

The limescale collection apparatus 104 also includes a temperature sensor 124, which may take any suitable form of temperature sensor 124, and is configured to determine the temperature within the limescale collection reservoir 108. The temperature sensor 124 is connected to the control unit 120 by sensor wiring 126. The control unit 120 can therefore react to measurements provided by the temperature sensor 124 to apply the correct current to the etched foil heating element 106 to heat the limescale collection reservoir 108 or to turn off the supply of current should the limescale collection reservoir 108 overheat.

In this arrangement, the limescale collection apparatus 104 need not be places immediately adjacent and in contact with the interior oven cavity 6, but may be spaced therefrom. Such spacing cold improve the accessibility of the limescale collection apparatus 104.

Furthermore, additional control of the temperature of the water within the limescale collection apparatus 104 may be achieved with this arrangement allowing more efficient removal of limescale from the water. The heating of the reservoir 108 may also be turned off, for example for maintenance procedures.

While embodiments have been described above and herein, it should be understood that various modifications may be made thereto or alternatives used following the same principles of the disclosure.

## Claims

1. A limescale collection apparatus (4; 104) for use with an aircraft galley steam oven (2) comprising:
a reservoir (32; 108) configured to hold water;
a water inlet (34) fluidly connected to the reservoir (32; 108);
a water outlet (36) fluidly connected to the reservoir (32; 108); and
one or more deposition surfaces (38A, 38B) within the reservoir (32; 108) for deposition of scale (40).

2. The limescale collection apparatus (4) of claim 1, comprising a heat exchanger (28) connected to the reservoir (32) configured to transfer heat to the water in the reservoir (32).

3. The limescale collection apparatus (4) of claim 2, wherein the heat exchanger (28) is partially insulated to moderate the heat transfer to the water in the reservoir (32).

4. The limescale collection apparatus (104) of claim 1, comprising:
a heating element (106) configured to heat the reservoir (108); and
a control unit (122) configured to control the heating element (106).

5. The limescale collection apparatus (104) of claim 4, wherein the heating element (106) is an etched foil heating element (106).

6. The limescale collection apparatus (104) of claim 4 or 5, comprising a temperature sensor (124) configured to monitor the temperature of the reservoir (108) and to provide a temperature signal to the control unit (122).

7. The limescale collection apparatus (104) of any of claims 4 to 6 comprising an insulation sleeve (114) disposed around the heating element (106) and the reservoir (108).

8. The limescale collection apparatus (4; 104) of any preceding claim, wherein the water inlet (34) comprises a pipe having a proximal end (46) attached to a base (44) of the reservoir (32; 108) and a distal end (48) disposed at a location between 30% and 70% of an axial length (L) of the limescale collection apparatus (4) away from the base (44) of the reservoir (32; 108).

9. The limescale collection apparatus (4; 104) of any preceding claim, wherein the one or more deposition surfaces (38A) include interior surfaces of walls (42A, 42B) of the reservoir (32; 108).

10. The limescale collection apparatus (4; 104) of any preceding claim, wherein the one or more deposition surfaces (38B) include surfaces of ribs (38B) extending inwardly into the reservoir (32; 108) from walls (42A, 42B) of the reservoir (32; 108).

11. The limescale collection apparatus (4; 104) of any preceding claim, comprising an inlet baffle plate (58) configured to direct water away from the water inlet (34) upon entry into the reservoir (32).

12. The limescale collection apparatus of any preceding claim, wherein the one or more deposition surfaces (38A, 38B) comprise a hydrophobic coating configured to reduce the energy required to remove the deposited limescale (40) from the one or more deposition surfaces (38A, 38B).

13. A steam oven (2) for an aircraft galley comprising:
an interior oven cavity (6);
one or more heating elements (12) configured to heat the interior oven cavity (6) to over 100°C; and
a water supply system (3), wherein the water supply system (3) includes:
a water inlet (18) configured to be connected to an external water source;
the limescale collection apparatus (4) of any preceding claim;
an injector valve (20); and
a water injector (16) configured to inject water from the water supply system (3) to the interior oven cavity (6) for evaporation,
wherein the limescale collection apparatus (4; 104) is replaceably removable from the steam oven (2).

14. The steam oven of claim 13, wherein the water supply system (3) comprises a bypass water line (24) fluidly connected in parallel with the limescale collection apparatus (4; 104) between the water inlet (18) and the injector valve (20), wherein the bypass line (24) includes an over pressure valve (26).

15. The steam oven of claim 13 or 14 as dependent on claim 2, directly or indirectly, wherein:
the heat exchanger (28) is a heat sink (28) having a first side (29A) disposed in contact with an oven wall (8D) of the interior oven cavity (6) in the vicinity of the one or more heating elements (12); and
the heat sink (28) has a second side (29B) opposing the first side (29A) and disposed in contact with a wall (42A) of the reservoir (32).
